# EUROPEAN PATENT APPLICATION

(11) **EP 4 786 809 A1**
(43) Date of publication of application: **05.08.2026**
(21) Application number: 26150865.9
(22) Date of filing: 08.01.2026
(51) Int. Cl.: F16C 19/52, F16C 41/00, F16C 43/04

(54) **ELECTROMAGNETIC NOISE PREVENTION MEMBER FOR ROLLING BEARING, AND ROLLING BEARING UNIT**

(30) Priority: 31.01.2025 JP 2025014958
(71) Applicant: NSK-WARNER K.K., Tokyo 141-8560 (JP)
(72) Inventor: SETOI, Mutsumi, Fukuroi-shi, Shizuoka, 437-8535 (JP); FURUYA, Masatomo, Fukuroi-shi, Shizuoka, 437-8535 (JP)
(74) Representative: Berggren Oy

(57) **Abstract**

An electromagnetic noise prevention member (1A) for a rolling bearing, the electromagnetic noise prevention member being mounted on a rolling bearing unit including the rolling bearing in which one bearing ring is a fixed ring and the other bearing ring is a rotating ring, the electromagnetic noise prevention member includes: a spring plate (10A) including an annular portion (11A) and at least one elastic portion (13A) that extends continuously from the annular portion in a radial direction, the spring plate being made of a thin plate of a conductive material; and a soft conductive member (20) mounted on a surface of the elastic portion that faces the rotating ring or a rotating member to which the rotating ring is fitted. The soft conductive member is capable of abutting against at least a part of a surface of the rotating ring or at least a part of a surface of the rotating member.

## Description

### BACKGROUND

### 1. Field of the Invention

The present disclosure relates to an electromagnetic noise prevention member for a rolling bearing that prevents generation of electromagnetic noise in a rolling bearing unit, and the rolling bearing unit provided with the electromagnetic noise prevention member for a rolling bearing.

### 2. Description of the Related Art

In recent years, there has been a progress in practical use of an electric vehicle in which an electric motor serving as a drive source is provided inside or in the vicinity of the wheels to drive the wheels. In an electronic product in such a driving motor or the like, electromagnetic noise caused by an induced current, discharge, interruption, or the like is generated from the electronic product and an electric component, and a problem such as electromagnetic interference between components may occur. Therefore, various devices for preventing the generation of electromagnetic noise have been proposed.

For example, JP2024-130948A proposes a conductive bearing in which a rod-shaped carbon brush having conductivity is provided between a metal ring provided adjacent to an outer ring and an inner ring. The carbon brush described above is biased toward the inner ring by a spring, and the distal end thereof slides on the inner ring. Therefore, a current flowing through the conductive bearing can flow outside the system via the metal ring and the brush to remove electromagnetic noise.

JP2023-018214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes a rolling bearing including a rolling element having rigidity and a flexible rolling element having conductivity, in which a raceway surface of the flexible rolling element is rougher than a raceway surface of the rolling element. JP2022-139252A described above discloses that the operation can be performed in a state in which the oil film on the raceway surface of the flexible rolling element is cut, and the electromagnetic noise prevention effect can be improved.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

In JP2024-130948A, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required. Further, in JP2024-130948A, it is necessary to form an inner claw on the outer ring and an outer claw on the metal ring for the purpose of combining the outer ring and the metal ring movably and relatively rotatably in the width direction and the axial direction.

In the technique described in JP2023-018214A, the abrasion powder generated from the metal housing or the mating member may contaminate the lubricant or the grease sealed for lubrication and may damage the raceway surface or the rolling surface. Further, in JP2023-018214A, it is necessary to form a shaft hole in the housing in order to receive a centrifugal force and bring the lip into sliding contact when the rotating shaft rotates, for the purpose of sealing the housing such that lubricating oil for lubricating the motor does not leak to the outside of the housing.

In the technique described in JP2022-139252A, in order to cut the oil film on the raceway surface of the flexible rolling element, it is necessary not to perform mirror finishing after cutting, or to perform matte finishing or blasting. In this way, in the invention disclosed in JP2024-130948A, JP2023-018214A and JP2022-139252A described above, the components need to be newly processed.

In JP2000-244180A, a wear-resistant member is selected as the sliding contact member, but the effect of reducing wear is not sufficient.

### SUMMARY

An object of the present disclosure is to provide a space-saving and inexpensive electromagnetic noise prevention member and a rolling bearing unit provided with the electromagnetic noise prevention member. Accordingly, in addition to preventing the generation of the abrasion powder from a conductive member or the abrasion powder accompanying sliding contact between the conductive member and a mating member, and minimizing damage to the mating member, the electromagnetic noise prevention member and the rolling bearing unit can be used with the existing bearing without requiring new processing on the bearing and without the restriction on the type of the bearing.

The above object of the present disclosure is achieved by the following configurations [1] to [13] related to an electromagnetic noise prevention member for a rolling bearing.
[1] An electromagnetic noise prevention member for a rolling bearing, the electromagnetic noise prevention member being mounted on a rolling bearing unit including the rolling bearing in which one bearing ring is a fixed ring and the other bearing ring is a rotating ring, the electromagnetic noise prevention member including: a spring plate including an annular portion and at least one elastic portion that extends continuously from the annular portion in a radial direction, the spring plate being made of a thin plate of a conductive material; and a soft conductive member mounted on a surface of the elastic portion that faces the rotating ring or a rotating member to which the rotating ring is fitted, in which the soft conductive member is capable of abutting against at least a part of a surface of the rotating ring or at least a part of a surface of the rotating member.
[2] The electromagnetic noise prevention member for a rolling bearing according to [1], in which the soft conductive member is made of at least one selected from a resin-impregnated non-woven fabric, a non-woven fabric, a resin-impregnated woven fabric, a woven fabric, a resin-impregnated soft porous body, and a soft porous body.
[3] The electromagnetic noise prevention member for a rolling bearing according to [1], in which the spring plate includes the annular portion and a plurality of the elastic portions extending continuously from the annular portion in a radial shape, in which the soft conductive member is mounted on a surface of the elastic portion facing the rotating ring, and in which the soft conductive member is capable of abutting against a side surface of the rotating ring.
[4] The electromagnetic noise prevention member for a rolling bearing according to [1], in which the spring plate includes the annular portion and a plurality of the elastic portions extending continuously from the annular portion in a radial shape, in which the soft conductive member is mounted on a surface of the elastic portion facing the rotating member, and in which the soft conductive member is capable of abutting against a side surface of the rotating member.
[5] The electromagnetic noise prevention member for a rolling bearing according to [1], in which the annular portion is pressed against a side surface of the fixed ring with a spacer interposed therebetween.
[6] The electromagnetic noise prevention member for a rolling bearing according to [1], in which the spring plate includes the annular portion and a plurality of the elastic portions extending continuously from the annular portion in a radial shape, and in which the plurality of elastic portions are bent toward the rotating ring.
[7] The electromagnetic noise prevention member for a rolling bearing according to [1], in which the spring plate includes the annular portion and a plurality of the elastic portions extending continuously from the annular portion in a radial shape, and in which the plurality of elastic portions are formed flush with the annular portion.
[8] A rolling bearing unit including: a rolling bearing in which one bearing ring is a fixed ring and the other bearing ring is a rotating ring; and the electromagnetic noise prevention member for a rolling bearing according to any one of [1] to [7].
[9] The electromagnetic noise prevention member for a rolling bearing according to [1], in which the rolling bearing is of an inner ring rotating type in which the fixed ring is an outer ring fixed to a housing and the rotating ring is an inner ring into which a shaft directly connected to a motor is fitted, in which the spring plate includes the annular portion and the elastic portion extending continuously from an inner peripheral side end portion of the annular portion to a center of the annular portion, in which the soft conductive member is mounted on a surface of the elastic portion on a side facing the rolling bearing, and in which the soft conductive member is capable of abutting against a side surface of the shaft.
[10] The electromagnetic noise prevention member for a rolling bearing according to [9], in which the annular portion is pressed against a side surface of the outer ring with a spacer interposed therebetween.
[11] The electromagnetic noise prevention member for a rolling bearing according to [9], in which the elastic portion of the spring plate is bent toward the side surface of the shaft.
[12] The electromagnetic noise prevention member for a rolling bearing according to [9], in which the elastic portion of the spring plate is formed flush with the annular portion.
[13] A rolling bearing unit including: an inner ring rotating type rolling bearing in which an outer ring is fixed to a housing and in which a shaft directly connected to a motor is fitted to an inner ring; and the electromagnetic noise prevention member for a rolling bearing according to any one of [9] to [12].

In the electromagnetic noise prevention member according to the present disclosure, the soft conductive member attached to the elastic portion of the spring plate abuts against at least a part of the surface of the rotating ring or the rotating member. The biasing force of the soft conductive member to the rotating ring or the rotating member by the spring plate is not fairly large, and the abrasion powder is less likely to be generated. Since the soft conductive member is made of a soft material, damage to the rotating ring that is the mating member is also small.

The electromagnetic noise prevention member for a rolling bearing and the rolling bearing unit can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be minimized.

The bearing unit according to the present disclosure is provided with the electromagnetic noise prevention member according to the present disclosure. Therefore, generation of the abrasion powder and damage to the mating member are prevented, and further, the bearing unit is highly versatile and does not require an increase in space.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIGS. 1A to 1C show an example of an electromagnetic noise prevention member according to a first embodiment of the present disclosure applied to an inner ring rotating type bearing unit, in which FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B;
FIG. 2 is a cross-sectional view showing a state in which the electromagnetic noise prevention member shown in FIGS. 1A to 1C is attached to the bearing unit;
FIG. 3 is a cross-sectional view showing an example of the bearing unit in which the electromagnetic noise prevention member shown in FIGS. 1A to 1C is incorporated;
FIGS. 4A and 4B show an example of an electromagnetic noise prevention member according to a second embodiment of the present disclosure applied to a bearing unit on the rotation side of the outer ring, in which FIG. 4A is a plan view thereof, and FIG. 4B is a cross-sectional view taken along a line A-A in FIG. 4A;
FIG. 5 is a cross-sectional view showing a state in which the electromagnetic noise prevention member shown in FIGS. 4A and 4B is attached to the bearing unit;
FIG. 6 is a cross-sectional view showing an example of the bearing unit in which the electromagnetic noise prevention member shown in FIGS. 4A and 4B is assembled;
FIG. 7 is a cross-sectional view showing an example of an inner ring rotating type bearing unit provided with an electromagnetic noise prevention member according to a third embodiment of the present disclosure;
FIG. 8 is a cross-sectional view showing an example of an inner ring rotating type bearing unit provided with another electromagnetic noise prevention member according to the third embodiment of the present disclosure;
FIG. 9 is a cross-sectional view showing an example of an outer ring rotating type bearing unit provided with an electromagnetic noise prevention member according to a fourth embodiment of the present disclosure;
FIG. 10 is a cross-sectional view showing an example of an outer ring rotating type bearing unit provided with another electromagnetic noise prevention member according to the fourth embodiment of the present disclosure;
FIGS. 11A to 11C show an example of an electromagnetic noise prevention member according to a fifth embodiment of the present disclosure, in which FIG. 11A is a plan view thereof, FIG. 11B is a cross-sectional view taken along a line A-A in FIG. 11A, and FIG. 11C is an enlarged view showing a bent portion of an elastic portion in FIG. 11B;
FIG. 12 is a cross-sectional view showing a state in which the electromagnetic noise prevention member shown in FIGS. 11A to 11C is attached to the bearing unit;
FIG. 13 is a cross-sectional view showing an example of the bearing unit in which the electromagnetic noise prevention member shown in FIGS. 11A to 11C is incorporated;
FIG. 14 is a cross-sectional view corresponding to FIG. 1B and showing an electromagnetic noise prevention member according to a modification of the present disclosure;
FIG. 15 is a cross-sectional view corresponding to FIG. 4B and showing an electromagnetic noise prevention member according to a modification of the present disclosure;
FIG. 16 is a cross-sectional view corresponding to FIG. 11B and showing an electromagnetic noise prevention member according to a modification of the present disclosure;
FIG. 17 is a cross-sectional view showing an example of the bearing unit on which the electromagnetic noise prevention member shown in FIG. 14 is mounted;
FIG. 18 is a cross-sectional view showing an example of the bearing unit on which the electromagnetic noise prevention member shown in FIG. 15 is mounted; and
FIG. 19 is a cross-sectional view showing an example of the bearing unit on which the electromagnetic noise prevention member shown in FIG. 16 is mounted.

### BRIEF DESCRIPTION OF THE DRAWINGS

Hereinafter, embodiments of the present disclosure will be described in detail with reference to the drawings. The present disclosure is not limited to the embodiments to be described below, and can be implemented by being freely changed without departing from the gist of the present disclosure. Hereinafter, the "electromagnetic noise prevention member for a rolling bearing" is simply referred to as an "electromagnetic noise prevention member", and the "rolling bearing unit" is simply referred to as a "bearing unit".

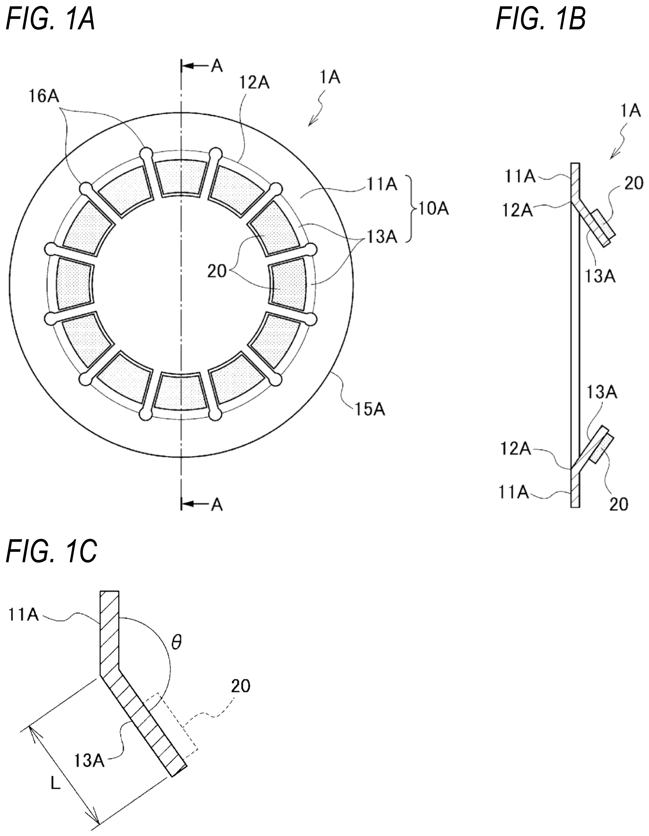

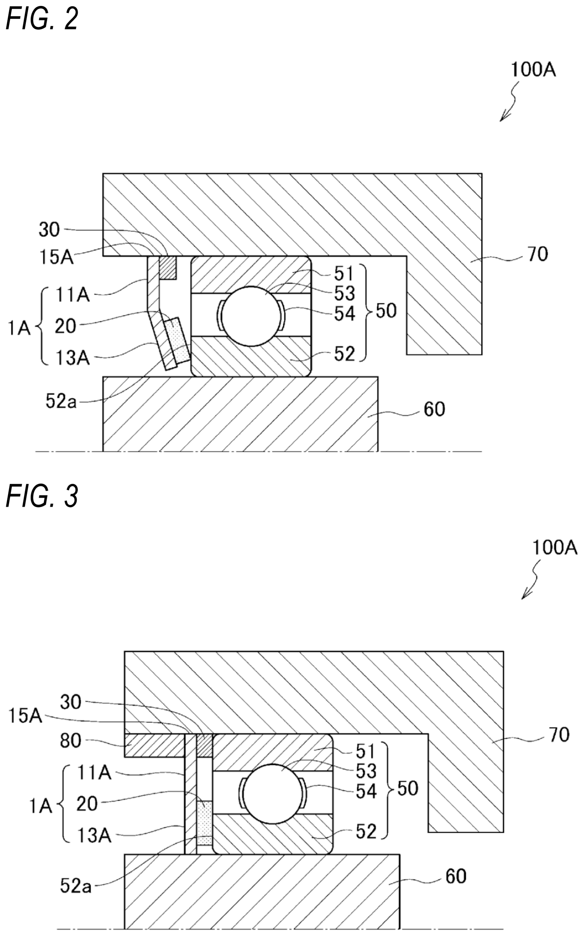

First Embodiment: Electromagnetic Noise Prevention Member and Bearing Unit for Inner Ring Rotation
FIGS. 1A to 1C show an example of an electromagnetic noise prevention member applied when a rotating ring is an inner ring, as an electromagnetic noise prevention member according to the present disclosure. FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B. FIG. 2 is a cross-sectional view showing a state in which the electromagnetic noise prevention member shown in FIGS. 1A to 1C is attached to the bearing unit. FIG. 3 is a cross-sectional view showing an example of the bearing unit in which the electromagnetic noise prevention member shown in FIGS. 1A to 1C is incorporated.

As shown in FIGS. 1A and 1B, an electromagnetic noise prevention member 1A for inner ring rotation includes a spring plate 10A including an annular portion 11A and a plurality of elastic portions 13A that are bent at an inner diameter side end portion 12A of the annular portion 11A and that extend continuously from the annular portion 11A toward the center in the radial direction in a radial shape. Further, notches 16A are formed on both sides of the bent portion of the elastic portion 13A with the annular portion 11A to maintain the bent state of the elastic portion 13A.

The spring plate 10A is entirely made of a thin plate made of a conductive material such as metal. When the conductive material is metal, stainless steel is preferable because stainless steel is easy to process and is less prone to rust.

A soft conductive member 20 is mounted on the surface of the bending side of each elastic portion 13A, and the spring plate 10A and the soft conductive member 20 constitute the electromagnetic noise prevention member 1A. The soft conductive member 20 is mounted on the elastic portion 13A using the adhesive or the like.

The soft conductive member 20 is obtained by mixing or supporting a conductive material in a soft base material, and as the soft base material, a porous body such as paper, cloth, or non-woven fabric, a resin sheet, or the like can be used. As the soft conductive member, a commercially available product called a "conductive sheet" or the like can also be used. Examples of the conductive material include metal fibers, pulverized products, and powders of silver, copper, gold, aluminum, stainless steel, and the like, or conductive carbon fibers, pulverized products, and powders. It is preferable that the soft conductive member is made of, among the materials, at least one selected from resin-impregnated non-woven fabrics, non-woven fabrics, resin-impregnated woven fabrics, woven fabrics, resin-impregnated soft porous bodies such as sponges, and soft porous bodies such as sponges.

As shown in FIGS. 2 and 3, a bearing unit 100A according to a first embodiment includes a rolling bearing, and the electromagnetic noise prevention member 1A shown in FIGS. 1A to 1C is mounted thereon. A rolling bearing 50 includes an outer ring 51 constituting one bearing ring, an inner ring 52 constituting the other bearing ring, and a plurality of rolling elements (balls) 53 rollably held between the outer ring 51 and the inner ring 52 by a retainer 54, and the rolling elements 53 are smoothly rolled by an in-bearing lubricant such as a lubricating oil or a grease composition. Here, the rotating ring is the inner ring 52, and a shaft 60 directly connected to a motor (not shown) is fitted into the inner diameter side of the inner ring 52. The outer ring 51 is a fixed ring and is fixed to a housing 70.

The soft conductive member 20 is mounted on the surface (the right side in the drawing) of the elastic portion 13A facing the inner ring (the rotating ring) 52, and is mounted on the bearing unit 100A in a state in which the surface on the bending side provided with the soft conductive member 20 faces the inner ring 52.

As shown in FIG. 3, the bearing unit 100A is used in a state in which the annular portion 11A of the electromagnetic noise prevention member 1A is pressed against the side surface of the outer ring 51 by a conductive pressing member 80 with a conductive spacer 30 interposed therebetween. Therefore, the outer diameter side of the outer ring 51 and an outer peripheral end surface 15A of the annular portion 11A in the spring plate 10A are fixed in a state of abutting against the housing 70, and the soft conductive member 20 can abut against a side surface 52a of the inner ring 52. Since the spring plate 10A is made of a thin plate and has elasticity, by pressing the annular portion 11A of the electromagnetic noise prevention member 1A against the outer ring 51 side, the elastic force due to the pressing acts on the elastic portion 13A, and the elastic portion 13A is pushed and expanded such that a bending angle θ shown in FIG. 1C increases. Accordingly, the portion of the soft conductive member 20 that is away from the side surface 52a of the inner ring 52 in FIG. 2 also moves toward the rolling bearing 50, and almost the entire soft conductive member 20 comes into contact with the side surface 52a of the inner ring 52.

The spacer 30 may have a thickness in consideration of the pressing amount of the spring plate 10A, the thickness of the soft conductive member 20, and the like. The annular portion 11A of the electromagnetic noise prevention member 1A may directly abut against the side surface of the outer ring 51 without providing the spacer 30.

In the first embodiment, the soft conductive member 20 in the electromagnetic noise prevention member 1A is mounted on the housing 70 so as to abut against the side surface 52a of the inner ring 52. The annular portion 11A of the spring plate 10A is electrically connected to the side surface of the outer ring 51 via the conductive spacer 30, and is also electrically connected to the conductive pressing member 80.

Accordingly, in the first embodiment, a current from a motor (not shown) that drives the shaft 60 flows to the inner ring 52. Thereafter, the current flows from the soft conductive member 20 to the elastic portion 13A and the annular portion 11A of the spring plate 10A through the inner ring 52, and flows to the grounded housing 70 via the outer peripheral end surface 15A of the annular portion 11A, the pressing member 80, the spacer 30, and the outer ring 51. In this way, the shaft 60 which is the rotating member and the housing 70 which is the fixing member are grounded, so that the shaft voltage which is the potential difference between the rotating member and the fixing member can be significantly reduced. Therefore, electromagnetic noise can be released through between the shaft 60 which is the rotating member and the housing 70 which is the fixing member.

Since the outer ring 51 has a large contact area with the housing 70, the current flowing through the outer ring 51 does not pass through the rolling element 53 and flows into the housing 70.

Since the side surface 52a of the inner ring 52 is in contact with the soft conductive member 20, the side surface 52a of the inner ring 52 is not damaged, and the rotation torque of the inner ring 52 can be prevented from decreasing. Further, since the biasing force of the soft conductive member 20 to the side surface of the inner ring 52 by the spring plate 10A is not fairly large, generation of the abrasion powder can be prevented.

When a porous body is selected as the soft conductive member 20 in the first embodiment, since the soft conductive member 20 has the oil absorption property and the oil retention property, oil is easily discharged between the adjacent spring plates 10A when the shaft rotates, and the oil film is less likely to form. Therefore, the conductivity is good even when the soft conductive member 20 is used in oil. Therefore, the soft conductive member 20 in the first embodiment is more preferably used in an oil environment without using a seal member for sealing the in-bearing lubricant. By using the base material of the soft conductive member 20 as a porous body, the friction coefficient can be reduced even when the soft conductive member 20 is used in an environment other than the oil environment, and a reduction in the rotation torque of the inner ring 52 can be prevented.

In the first embodiment, the outer peripheral end surface 15A of the annular portion 11A and the spacer 30 abut against the housing 70. Alternatively, the outer peripheral end surface 15A and the spacer 30 may be held between the outer ring 51 and the pressing member 80 without abutting against the housing 70. In this case, the current flowing through the annular portion 11A flows to the housing 70 via the outer ring 51 and the pressing member 80.

The annular portion 11A of the electromagnetic noise prevention member 1A may be directly pressed against the side surface of the outer ring 51 with the conductive spacer 30 interposed therebetween without providing the pressing member 80, and may be fixed in a manner of abutting against the housing 70.

As shown in FIG. 1C, when mounted on the bearing unit 100A, the bending angle θ between the annular portion 11A and the elastic portion 13A may be appropriately set according to a length (L) of the elastic portion 13A and the size of the soft conductive member 20 such that the soft conductive member 20 abuts against the side surface 52a of the inner ring 52 of the rolling bearing 50. By the bending angle θ, the biasing force of the soft conductive member 20 to the side surface 52a of the inner ring 52 of the rolling bearing 50 can be adjusted. By decreasing the bending angle θ, the biasing force can be strengthened, and conversely, by increasing the bending angle θ, the biasing force can be weakened.

By adjusting the pressing force of the pressing member 80 against the outer ring 51, the contact area between the soft conductive member 20 of the electromagnetic noise prevention member 1A and the side surface 52a of the inner ring 52 of the rolling bearing 50 can be changed. At this time, by increasing the contact area between the soft conductive member 20 and the side surface 52a of the inner ring 52, the generation of electromagnetic noise can be more effectively prevented. Further, the temperature rise due to friction can be prevented.

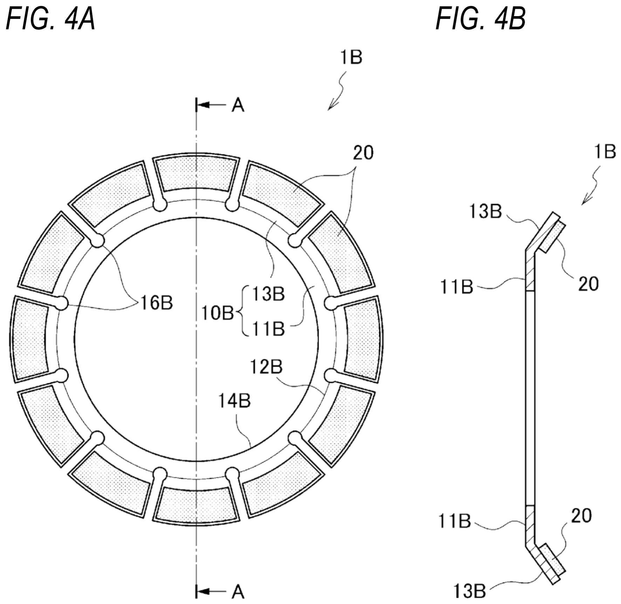

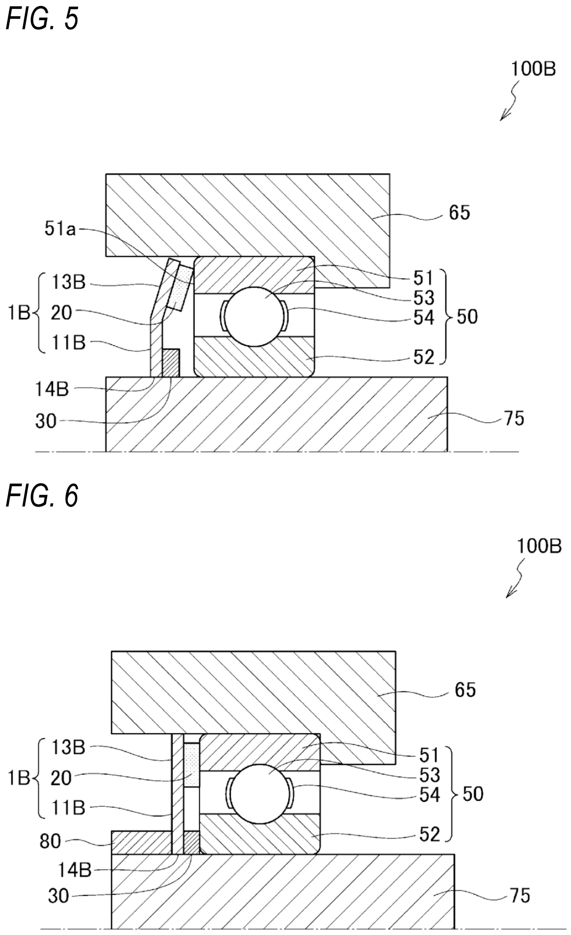

Second Embodiment: Electromagnetic Noise Prevention Member and Bearing Unit for Outer Ring Rotation
A case in which the inner ring 52 of the rolling bearing 50 is a rotating ring has been described in the first embodiment, and a bearing unit in which the outer ring 51 is a rotating ring will be described in a second embodiment. FIGS. 4A and 4B are views showing an electromagnetic noise prevention member for outer ring rotation, in which FIG. 4A is a plan view thereof, and FIG. 4B is a cross-sectional view taken along a line A-A in FIG. 4A. FIG. 5 is a cross-sectional view showing a state in which the electromagnetic noise prevention member shown in FIGS. 4A and 4B is attached to the bearing unit. FIG. 6 is a cross-sectional view showing an example of the bearing unit in which the electromagnetic noise prevention member shown in FIGS. 4A and 4B is incorporated.

In the bearing unit according to the second embodiment, the same members as those in the first embodiment are denoted by the same reference signs, and the detailed description thereof will be omitted or simplified.

As shown in FIGS. 4A and 4B, an electromagnetic noise prevention member 1B for outer ring rotation includes a spring plate 10B including an annular portion 11B and a plurality of elastic portions 13B that are bent at an outer diameter side end portion 12B of the annular portion 11B and that extend continuously from the annular portion 11B toward the outer periphery in the radial direction in a radial shape. As shown in FIG. 5, when the elastic portion 13B is mounted on a bearing unit 100B, the elastic portion 13B is bent toward the right side in the figure in a manner of facing the outer ring 51 of the rolling bearing 50. Arc-shaped notches 16B are formed on both sides of the bent portion of the elastic portion 13B with the annular portion 11B.

The soft conductive member 20 is mounted on the surface of each elastic portion 13B on the side facing the outer ring 51 of the rolling bearing 50 using an adhesive or the like, and the spring plate 10B and the soft conductive member 20 constitute the electromagnetic noise prevention member 1B.

As shown in FIGS. 5 and 6, a bearing unit 100B according to the second embodiment includes a rolling bearing 50, and the electromagnetic noise prevention member 1B shown in FIGS. 4A and 4B is mounted thereon. The inner ring 52 of the rolling bearing 50 is fixed to a fixing member 75, and a rotating member 65 is mounted on the outer ring 51. As shown in FIG. 5, the soft conductive member 20 is mounted on the surface (the right side in the drawing) of the elastic portion 13B facing the outer ring (the rotating ring) 51, and is mounted on the bearing unit 100B in a state in which the surface on the bending side provided with the soft conductive member 20 faces the outer ring 51.

As shown in FIG. 6, the bearing unit 100B is used in a state in which the annular portion 11B of the electromagnetic noise prevention member 1B is pressed against the side surface of the inner ring 52 by the pressing member 80 with the conductive spacer 30 interposed therebetween. Therefore, the inner diameter side of the inner ring 52 and the inner peripheral end surface of the annular portion 11B in the spring plate 10B are fixed in a state of abutting against the fixing member 75, and the soft conductive member 20 can abut against the side surface of the outer ring 51.

In the second embodiment, a current from a motor (not shown) that drives the rotating member 65 flows through the outer ring 51. Thereafter, the current flows from the soft conductive member 20 to the elastic portion 13B and the annular portion 11B of the spring plate 10B through the outer ring 51, and flows to the grounded fixing member 75 via an inner peripheral end surface 14B of the annular portion 11B, the pressing member 80, the spacer 30, and the inner ring 52. In this way, by grounding the rotating member 65 and the fixing member 75, the inside of the bearing is not energized, and the shaft voltage, which is the potential difference between the rotating member and the fixing member, can be significantly reduced. Therefore, electromagnetic noise can be reduced.

Similarly to the first embodiment, since the biasing force of the soft conductive member 20 to the side surface of the outer ring 51 by the spring plate 10B is not fairly large, generation of the abrasion powder can be prevented.

By adjusting the pressing force of the pressing member 80 against the outer ring 51 and increasing the contact area between the soft conductive member 20 and the side surface 51a of the outer ring 51, the generation of electromagnetic noise can be more effectively prevented. Further, the temperature rise due to friction can be prevented.

In the present embodiment, the annular portion 11B of the electromagnetic noise prevention member 1B may also directly abut against the side surface of the inner ring 52 without providing the spacer 30.

The inner peripheral end surface 14B of the annular portion 11B and the spacer 30 may abut against the fixing member 75 or may be held between the inner ring 52 and the pressing member 80 without abutting against the fixing member 75.

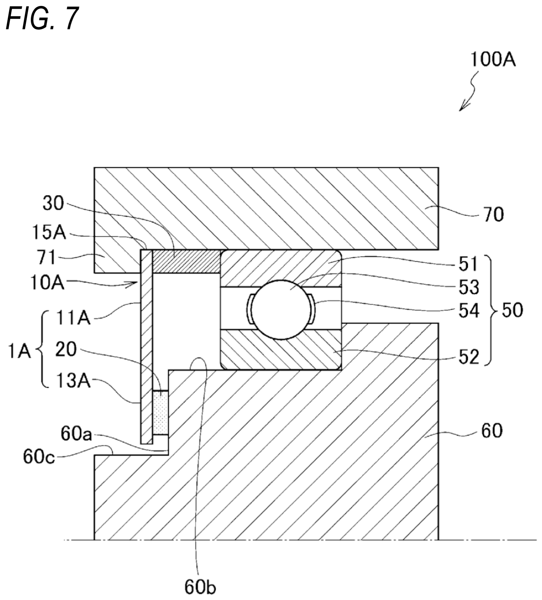

Third Embodiment: Electromagnetic Noise Prevention Member and Bearing Unit for Inner Ring Rotation
FIG. 7 shows a case in which the electromagnetic noise prevention member 1A is mounted on a bearing unit whose rotating ring is an inner ring, similarly to the first embodiment. In the bearing unit according to a third embodiment, the same members as those in the first embodiment are denoted by the same reference signs, and the detailed description thereof will be omitted or simplified.

In the third embodiment, the shaft 60, which is a rotating member to which the inner ring 52 is fitted, is formed with a stepped surface 60c having a smaller diameter than a fitting surface 60b to which the inner ring 52 is fitted. The soft conductive member 20 is mounted on the surface of the elastic portion 13A facing the shaft 60 in the axial direction, specifically, on a side surface 60a between the fitting surface 60b to which the inner ring 52 is fitted and the stepped surface 60c. The electromagnetic noise prevention member 1A is mounted on the housing 70 by elastically deforming the elastic portion 13A. The annular portion 11A of the spring plate 10A and the spacer 30 are held by the outer ring 51 and a flange portion 71 protruding to the inner diameter side of the housing 70.

As shown in FIG. 7, in such an inner ring rotating type bearing unit 100A, the soft conductive member 20 of the electromagnetic noise prevention member 1A is mounted on the housing 70 in a manner of abutting against the side surface 60a of the shaft 60. Accordingly, the annular portion 11A of the spring plate 10A is electrically connected to the side surface of the outer ring 51 via the conductive spacer 30, and is also electrically connected to the end surface of the flange portion 71 of the housing 70.

In the bearing unit 100A shown in FIG. 7, the current from the shaft 60 flows from the soft conductive member 20 to the elastic portion 13A and the annular portion 11A of the spring plate 10A through the side surface 60a of the shaft 60. Thereafter, the current flows to the housing 70 via the spacer 30 and the outer ring 51 or to the grounded housing 70 via the outer peripheral end surface 15A of the annular portion 11A. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electromagnetic noise can be reduced.

Similarly to the first embodiment, the biasing force of the soft conductive member 20 to the side surface of the shaft 60 by the spring plate 10A is not fairly large, and the abrasion powder is less likely to be generated.

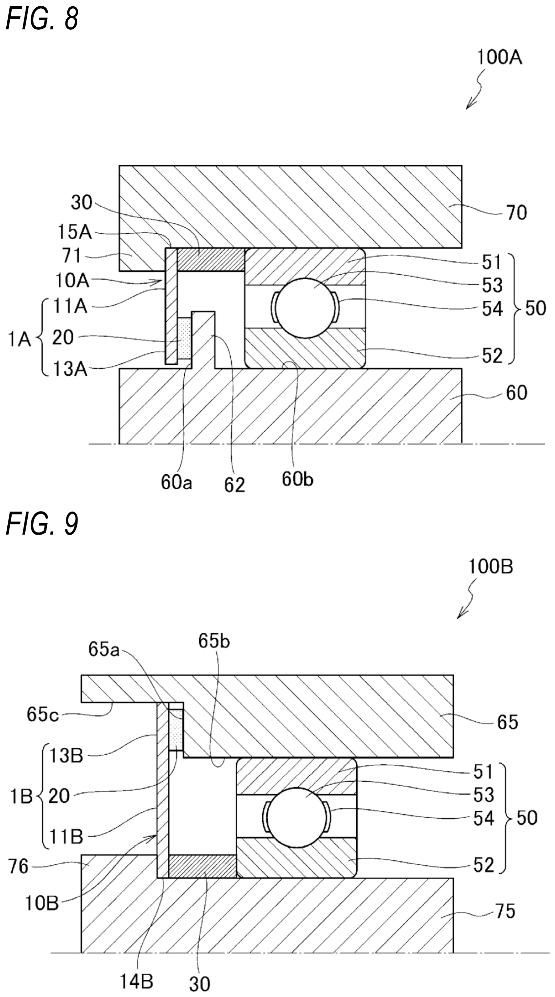

As shown in FIG. 8, in the present embodiment, the shaft 60 may be provided with a flange portion 62 that protrudes from the fitting surface 60b toward the outer diameter side, and the soft conductive member 20 may abut against the side surface 60a of the flange portion 62.

In particular, in the bearing unit 100A shown in FIG. 7, the position where the soft conductive member 20 is in contact with the side surface 60a of the shaft 60 has a smaller diameter than the position where the soft conductive member 20 is in contact with the side surface 52a of the inner ring 52 as shown in FIG. 3. Therefore, the circumferential speed of the side surface 60a of the shaft 60 can be reduced, and the generation of the abrasion powder and drag loss can be further reduced.

In the third embodiment, unlike the first embodiment, the electromagnetic noise prevention member 1A is not in contact with the side surface 52a of the inner ring 52. Therefore, the design freedom of the rolling bearing, such as the attachment of the snap ring, can be improved.

Fourth Embodiment: Electromagnetic Noise Prevention Member and Bearing Unit for Outer Ring Rotation
FIG. 9 shows a case in which the electromagnetic noise prevention member 1B is mounted on a bearing unit whose rotating ring is the outer ring 51, similarly to the second embodiment. In the bearing unit according to a fourth embodiment, the same members as those in the second embodiment are denoted by the same reference signs, and the detailed description thereof will be omitted or simplified.

In the fourth embodiment, the rotating member 65 to which the outer ring 51 is fitted has a stepped surface 65c having a larger diameter than a fitting surface 65b to which the outer ring 51 is fitted. The soft conductive member 20 is mounted on a surface of the elastic portion 13B facing the rotating member 65 in the axial direction, specifically, a surface facing the side surface 65a between the fitting surface 65b to which the outer ring 51 is fitted and the stepped surface 65c. Therefore, the soft conductive member 20 can abut against the side surface 65a of the rotating member 65.

As shown in FIG. 9, in the outer ring rotating type bearing unit 100B, the soft conductive member 20 of the electromagnetic noise prevention member 1B is mounted on the fixing member 75 in a manner of abutting against the side surface 65a of the rotating member 65. Accordingly, the annular portion 11B of the spring plate 10B is electrically connected to the side surface of the inner ring 52 via the conductive spacer 30, and is also electrically connected to the end surface of a flange portion 76 of the fixing member 75.

In the bearing unit 100B shown in FIG. 9, the current from a motor (not shown) that drives the rotating member 65 flows from the soft conductive member 20 to the inner peripheral end surface 14B of the annular portion 11B through the side surface 65a of the rotating member 65 via the elastic portion 13B and the annular portion 11B of the spring plate 10B. Thereafter, the current flows to the grounded fixing member 75 via the spacer 30 and the inner ring 52 or directly to the fixing member 75. In this way, by grounding the rotating member 65 and the fixing member 75, the inside of the bearing is not energized, and the shaft voltage, which is the potential difference between the rotating member and the fixing member, can be significantly reduced. Therefore, electromagnetic noise can be reduced.

Similarly to the first embodiment, since the biasing force of the soft conductive member 20 to the side surface of the rotating member 65 by the spring plate 10B is not fairly large, the abrasion powder is less likely to be generated.

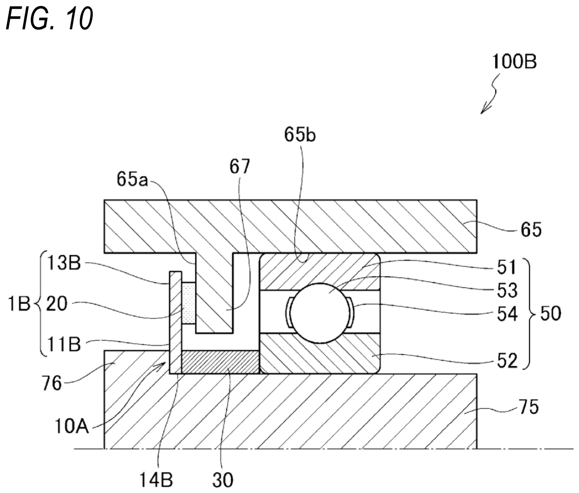

As shown in FIG. 10, in the present embodiment, the rotating member 65 may be provided with a flange portion 67 that protrudes from the fitting surface 65b toward the inner diameter side, and the soft conductive member 20 may abut against the side surface 65a of the flange portion 67.

In particular, in the bearing unit 100B shown in FIG. 10, the position where the soft conductive member 20 is in contact with the side surface 65a of the rotating member 65 has a smaller diameter than the position where the soft conductive member 20 is in contact with the side surface 51a of the outer ring 51 as shown in FIG. 6. Therefore, the circumferential speed of the side surface 65a of the rotating member 65 can be reduced, and the generation of the abrasion powder and drag loss can be further reduced.

In the fourth embodiment, unlike the second embodiment, the electromagnetic noise prevention member 1B is not in contact with the side surface 51a of the outer ring 51. Therefore, the design freedom of the rolling bearing, such as the attachment of the snap ring, can be improved.

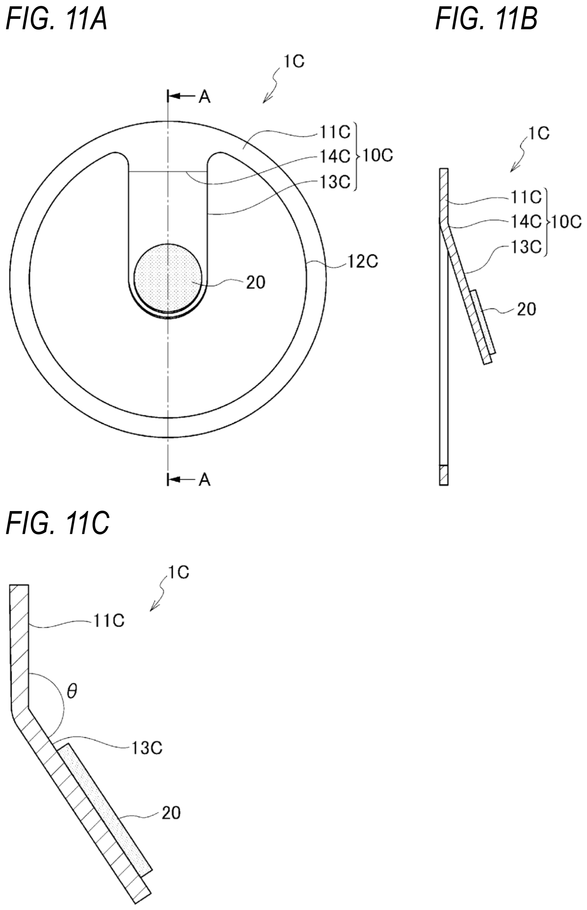

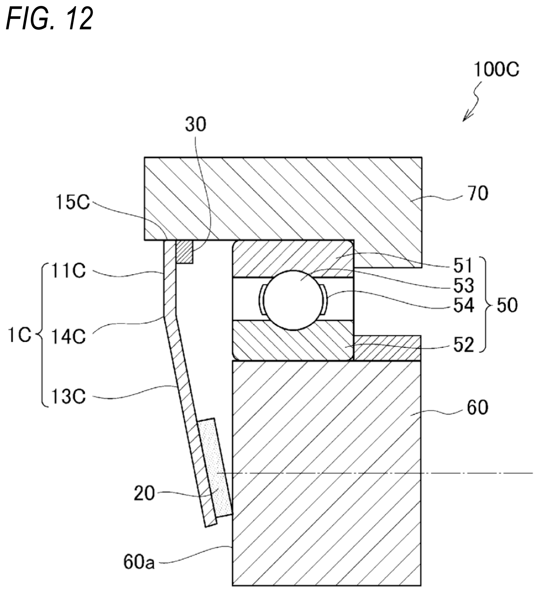

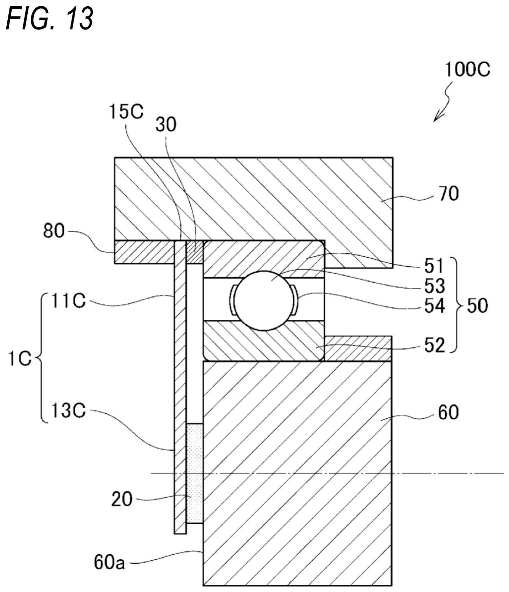

Fifth Embodiment: Electromagnetic Noise Prevention Member and Bearing Unit for Inner Ring Rotation Including One Elastic Portion
FIGS. 11A to 11C show an example of an electromagnetic noise prevention member according to a fifth embodiment of the present disclosure, in which FIG. 11A is a plan view thereof, FIG. 11B is a cross-sectional view taken along a line A-A in FIG. 11A, and FIG. 11C is an enlarged view showing a bent portion between an annular portion and an elastic portion in FIG. 11B. FIG. 12 is a cross-sectional view showing a state in which the electromagnetic noise prevention member shown in FIGS. 11A to 11C is attached to the bearing unit. FIG. 13 is a cross-sectional view showing an example of the bearing unit in which the electromagnetic noise prevention member shown in FIGS. 11A to 11C is incorporated.

In the bearing unit according to the fifth embodiment, the same members as those in the first embodiment are denoted by the same reference signs, and the detailed description thereof will be omitted or simplified.

As shown in FIGS. 11A to 11C, the electromagnetic noise prevention member 1C includes a spring plate 10C including an annular portion 11C and one elastic portion 13C that is bent at an inner peripheral side end portion 12C of the annular portion 11C and that extends continuously from the annular portion 11C toward the center in the radial direction. The elastic portion 13C is bent from an elastic base portion 14C serving as a starting point. The soft conductive member 20 is mounted on the surface of the bending side of the elastic portion 13C by an adhesive or the like, and the spring plate 10C and the soft conductive member 20 constitute the electromagnetic noise prevention member 1C.

As shown in FIG. 12, the electromagnetic noise prevention member 1C is mounted on the bearing unit 100C in a state in which the bending side surface (the right side in the drawing) of the elastic portion 13C faces the side surface 60a side of the shaft 60 fitted into the inner ring 52 of the rolling bearing 50. The side surface 60a side of the shaft 60 refers to a surface orthogonal to the axial direction of the shaft 60.

As shown in FIG. 13, the bearing unit 100C is used in a state in which the annular portion 11C of the electromagnetic noise prevention member 1C is pressed against the side surface of the outer ring 51 by the pressing member 80 with the spacer 30 interposed therebetween. Therefore, the soft conductive member 20 can abut against the side surface 60a of the shaft 60. Accordingly, the annular portion 11C of the spring plate 10C is electrically connected to the side surface of the outer ring 51 via the conductive spacer 30, and is also electrically connected to the housing 70.

In the fifth embodiment, a current from a motor (not shown) that drives the shaft 60 flows from the soft conductive member 20 to the elastic portion 13C and the annular portion 11C of the spring plate 10C, and flows to the grounded housing 70 via the outer peripheral end surface 15C of the annular portion 11C, the pressing member 80, the spacer 30, and the outer ring 51. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electromagnetic noise can be reduced.

Similarly to the first embodiment, since the biasing force of the soft conductive member 20 to the side surface of the shaft 60 by the spring plate 10C is not fairly large, the abrasion powder is less likely to be generated.

In the fifth embodiment, the outer peripheral end surface 15C of the annular portion 11C and the spacer 30 abut against the housing 70. Alternatively, the outer peripheral end surface 15C and the spacer 30 may be held between the outer ring 51 and the pressing member 80 without abutting against the housing 70. In this case, the current flowing through the annular portion 11C flows to the housing 70 via the outer ring 51 and the pressing member 80. Since the outer ring 51 has a large contact area with the housing 70, the current flowing through the outer ring 51 does not pass through the rolling element 53 and flows into the housing 70.

In the bearing unit 100C, the soft conductive member 20 abuts against the side surface 60a of the shaft 60, and the peripheral speed is further reduced as compared with a case in which the soft conductive member 20 is in contact with the side surface of the inner ring 52. Therefore, it is possible to further reduce generation of the abrasion powder and drag loss as compared with other embodiments. Since the peripheral speed is lowest near the center of the shaft, it is more preferable that the soft conductive member 20 abuts near the center of the shaft.

The present disclosure is not limited to the above embodiments, and may be modified and improved as appropriate.

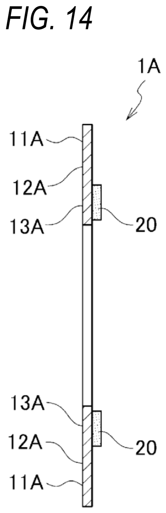

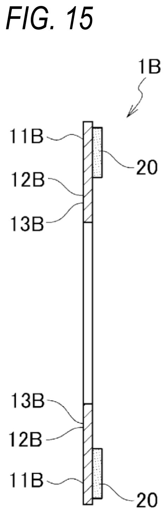

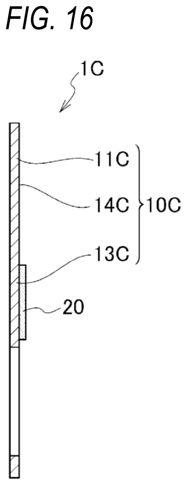

For example, in the above embodiments, the elastic portions 13A, 13B, and 13C of the spring plates 10A, 10B, and 10C are bent toward the rotating ring. Alternatively, the elastic portions 13A, 13B, and 13C may also be formed flush with the annular portions 11A, 11B, and 11C without being bent at the inner diameter side end portion 12A, the outer diameter side end portion 12B, and the elastic base portion 14C. For example, in the case of the electromagnetic noise prevention member 1A for inner ring rotation shown in FIGS. 1A to 1C, as shown in FIG. 14, the annular portion 11A and the elastic portion 13A may be linearly continuous in the cross-sectional view. For example, in the case of the electromagnetic noise prevention member 1B for outer ring rotation shown in FIGS. 4A and 4B, as shown in FIG. 15, the annular portion 11B and the elastic portion 13B may be linearly continuous in the cross-sectional view. Further, for example, in the case of the electromagnetic noise prevention member 1C shown in FIGS. 11A to 11C, as shown in FIG. 16, the annular portion 11C and the elastic portion 13C may be linearly continuous in the cross-sectional view.

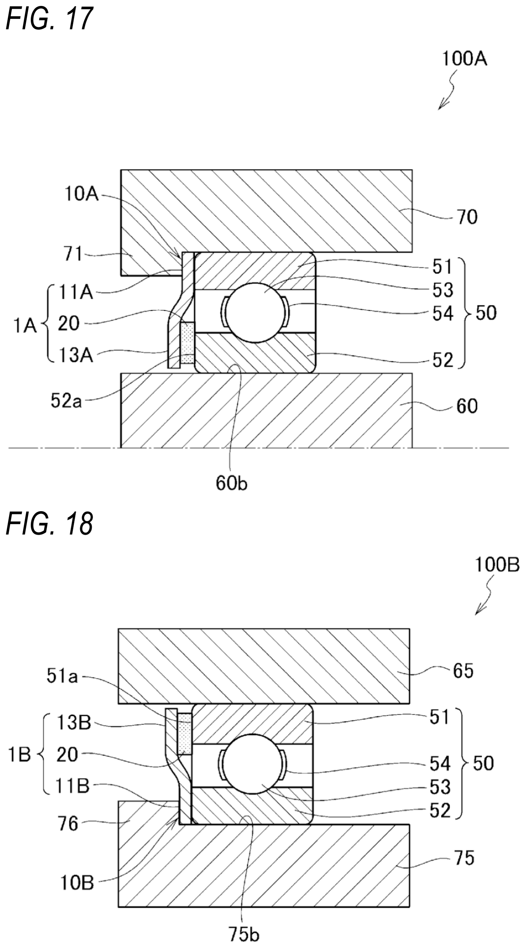

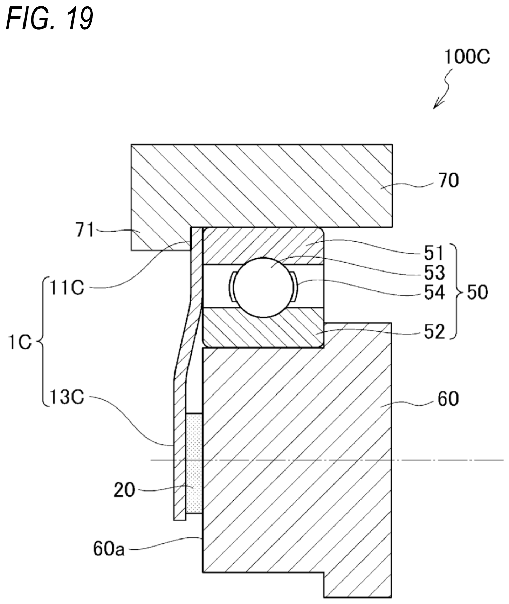

Therefore, in the bearing units 100A and 100C shown in FIGS. 17 and 19, when the annular portion 11A of the electromagnetic noise prevention member 1A and the annular portion 11C of the electromagnetic noise prevention member 1C are held between the flange portion 71 of the housing 70 and the side surface of the outer ring 51, the elastic portion 13A of the electromagnetic noise prevention member 1A and the elastic portion 13C of the electromagnetic noise prevention member 1C are elastically deformed by an amount equal to the thickness of the soft conductive member 20, and the soft conductive member 20 abuts against the side surface 52a of the inner ring 52 and the side surface 60a of the shaft 60 by the bending reaction force of the spring plates 10A and 10C. In the bearing unit 100B shown in FIG. 18, when the annular portion 11B of the electromagnetic noise prevention member 1B is held between the flange portion 76 of the fixing member 75 and the side surface of the inner ring 52, the elastic portion 13B of the electromagnetic noise prevention member 1B is elastically deformed by an amount equal to the thickness of the soft conductive member 20, and the soft conductive member 20 abuts against the side surface 51a of the outer ring 51 by the bending reaction force of the spring plate 10B. Accordingly, the same function as that of the above embodiment can be achieved.

In this case, since bending of the spring plates 10A, 10B, and 10C is not required, the electromagnetic noise prevention members 1A, 1B, and 1C can be manufactured at low cost, and the spring plates 10A, 10B, and 10C and the soft conductive member 20 can be bonded together easily.

In common to all the embodiments, the planar shape of the soft conductive member 20 is not limited. In addition to the fan shape shown in FIG. 1A, a rectangle may be used. A plurality of small pieces may be used.

## Claims

1. An electromagnetic noise prevention member for a rolling bearing, the electromagnetic noise prevention member being mounted on a rolling bearing unit including the rolling bearing in which one bearing ring is a fixed ring and the other bearing ring is a rotating ring, the electromagnetic noise prevention member comprising:
a spring plate including an annular portion and at least one elastic portion that extends continuously from the annular portion in a radial direction, the spring plate being made of a thin plate of a conductive material; and
a soft conductive member mounted on a surface of the elastic portion that faces the rotating ring or a rotating member to which the rotating ring is fitted,
wherein the soft conductive member is capable of abutting against at least a part of a surface of the rotating ring or at least a part of a surface of the rotating member.

2. The electromagnetic noise prevention member for a rolling bearing according to claim 1,
wherein the soft conductive member is made of at least one selected from a resin-impregnated non-woven fabric, a non-woven fabric, a resin-impregnated woven fabric, a woven fabric, a resin-impregnated soft porous body, and a soft porous body.

3. The electromagnetic noise prevention member for a rolling bearing according to claim 1,
wherein the spring plate includes the annular portion and a plurality of the elastic portions extending continuously from the annular portion in a radial shape,
wherein the soft conductive member is mounted on a surface of the elastic portion facing the rotating ring, and
wherein the soft conductive member is capable of abutting against a side surface of the rotating ring.

4. The electromagnetic noise prevention member for a rolling bearing according to claim 1,
wherein the spring plate includes the annular portion and a plurality of the elastic portions extending continuously from the annular portion in a radial shape,
wherein the soft conductive member is mounted on a surface of the elastic portion facing the rotating member, and
wherein the soft conductive member is capable of abutting against a side surface of the rotating member.

5. The electromagnetic noise prevention member for a rolling bearing according to claim 1,
wherein the annular portion is pressed against a side surface of the fixed ring with a spacer interposed therebetween.

6. The electromagnetic noise prevention member for a rolling bearing according to claim 1,
wherein the spring plate includes the annular portion and a plurality of the elastic portions extending continuously from the annular portion in a radial shape, and
wherein the plurality of elastic portions are bent toward the rotating ring.

7. The electromagnetic noise prevention member for a rolling bearing according to claim 1,
wherein the spring plate includes the annular portion and a plurality of the elastic portions extending continuously from the annular portion in a radial shape, and
wherein the plurality of elastic portions are formed flush with the annular portion.

8. A rolling bearing unit comprising:
a rolling bearing in which one bearing ring is a fixed ring and the other bearing ring is a rotating ring; and
the electromagnetic noise prevention member for a rolling bearing according to any one of claims 1 to 7.

9. The electromagnetic noise prevention member for a rolling bearing according to claim 1,
wherein the rolling bearing is of an inner ring rotating type in which the fixed ring is an outer ring fixed to a housing and the rotating ring is an inner ring into which a shaft directly connected to a motor is fitted,
wherein the spring plate includes the annular portion and the elastic portion extending continuously from an inner peripheral side end portion of the annular portion to a center of the annular portion,
wherein the soft conductive member is mounted on a surface of the elastic portion on a side facing the rolling bearing, and
wherein the soft conductive member is capable of abutting against a side surface of the shaft.

10. The electromagnetic noise prevention member for a rolling bearing according to claim 9,
wherein the annular portion is pressed against a side surface of the outer ring with a spacer interposed therebetween.

11. The electromagnetic noise prevention member for a rolling bearing according to claim 9,
wherein the elastic portion of the spring plate is bent toward the side surface of the shaft.

12. The electromagnetic noise prevention member for a rolling bearing according to claim 9,
wherein the elastic portion of the spring plate is formed flush with the annular portion.

13. A rolling bearing unit comprising:
an inner ring rotating type rolling bearing in which an outer ring is fixed to a housing and in which a shaft directly connected to a motor is fitted to an inner ring; and
the electromagnetic noise prevention member for a rolling bearing according to any one of claims 9 to 12.
